# EUROPEAN PATENT APPLICATION

(11) **EP 2 284 760 A2**
(43) Date of publication of application: **16.02.2011**
(21) Application number: 10172226.2
(22) Date of filing: 06.08.2010
(51) Int. Cl.: G06F 21/04, G06F 21/20

(54) **Information processing system and control method thereof, and program**

(30) Priority: 07.08.2009 JP 2009184833
(71) Applicant: Canon Kabushiki Kaisha, Tokyo 146-8501 (JP)
(72) Inventor: Mihara, Makoto, Ohta-ku Tokyo (JP)
(74) Representative: Garner, Jonathan Charles Stapleton

(57) **Abstract**

This invention provides an information processing system which allows an application on a Web server to execute authentication processing of a user in an information processing apparatus and a control method thereof, and a program. To accomplish this, in an information processing system of this invention, a Web application (410) of a Web server (103) requests a service provider (450) of an MFP (101) to execute authentication processing. The service provider (450) instructs a login application (430) to execute an authentication function, and transmits generated authentication information to the Web application (410).

## Description

### BACKGROUND OF THE INVENTION

### Field of the Invention

The present invention relates to an information processing system including an information processing apparatus such as an MFP and a control method thereof, and a program.

### Description of the Related Art

In recent years, an information processing system in which an information processing apparatus such as an MFP (Multi Function Peripheral) includes a Web browser in addition to scanner and printer functions, and a Web server on a network includes various applications for the MFP is known. In such an information processing system, the MFP displays an operation screen on its operation unit using Web page information provided from the Web server on the network. The MFP transmits an instruction input by the user using the operation screen to the Web server. The Web server executes processing by means of an application according to the contents of the instruction.

For example, Japanese Patent Laid-Open No. 2006-127503 has proposed the following method. In this method, a Web server provides an MFP with an operation screen that allows the user to use various functions of the MFP, and the MFP displays the operation screen on a Web browser. This MFP notifies the Web server of an instruction input from the user via the operation screen. The Web server, which received the notification, notifies the MFP of an execution instruction of processing corresponding to the contents of the instruction. Furthermore, the MFP, which received the notification, executes the instructed processing. Then, since all menu data required to execute respective functions of the MFP need not be held inside the MFP, for example, when the menu data are required to be changed, such requirement can be easily met by changing data on the Web server.

Some information processing apparatuses such as MFPs include a user authentication function using, for example, a user ID and password, so as to limit a user who is permitted to use the apparatus as in a general information processing apparatus such as a PC. It is a common practice for the aforementioned MFP including the Web browser function to transmit information input via, for example, the operation screen on the MFP to the Web server, and to execute authentication processing by an application on the Web server. On the other hand, a demand has arisen for the ability to use the MFP to execute the user authentication in place of the Web server. For example, the MFP may include an external authentication device such as an IC card reader or fingerprint reader to implement an authentication function in cooperation with such device or to implement function-dependent authentication functions of the MFP.

However, it is difficult for the aforementioned related art to control, from an application on the Web server, the authentication function of the MFP including the Web browser function For this reason, in the conventional MFP, user authentication has to be executed before the beginning of use of an application on the Web server, and the authentication function cannot be executed from that application during operation of the application on the Web server via the Web browser.

### SUMMARY OF THE INVENTION

The present invention has been made in consideration of the aforementioned problems, and provides an information processing system which allows an application on a Web server to execute user authentication processing in an information processing apparatus.

According to a first aspect of the present invention there is provided an information processing system according to claims 1 to 6.

According to a second aspect of the present invention there is provided an information processing system according to claim 7.

According to a third aspect of the present invention there is provided a control method of an information processing system according to claim 8.

According to a fourth aspect of the present invention there is provided a control method of an information processing system according to claim 9.

According to the present invention, for example, an information processing system which allows an application on a Web server to execute user authentication processing in an information processing apparatus can be provided.

Further features of the present invention will become apparent from the following description of exemplary embodiments (with reference to the attached drawings) .

### BRIEF DESCRIPTION OF THE DRAWINGS

Fig. 1 is a diagram showing an example of the overall arrangement of an information processing system 100 according to an embodiment of the present invention;

Fig. 2 is a block diagram showing an example of the arrangement of an MFP 101 in the information processing system 100 according to the embodiment of the present invention;

Fig. 3 is a block diagram showing an example of the arrangement of a Web server 103 in the information processing system 100 according to the embodiment of the present invention;

Fig. 4 is a block diagram showing an example of the control arrangement of the information processing system 100 according to the embodiment of the present invention;

Fig. 5 is a sequence chart showing a series of processes in the information processing system 100 according to the embodiment of the present invention;

Fig. 6 is a view showing an example of a menu screen displayed on a display unit of an operation unit 219 of the MFP 101 in the information processing system 100 according to the embodiment of the present invention;

Fig. 7 is a flowchart showing the sequence of processing in the Web server 103 in the information processing system 100 according to the embodiment of the present invention;

Fig. 8 is a flowchart showing the sequence of processing in the MFP 101 in the information processing system 100 according to the embodiment of the present invention; and

Fig. 9 is a view showing an example of a login screen displayed on the display unit of the operation unit 219 of the MFP 101 in the information processing system 100 according to the embodiment of the present invention.

### DESCRIPTION OF THE EMBODIMENTS

An embodiment of the present invention will be described hereinafter.

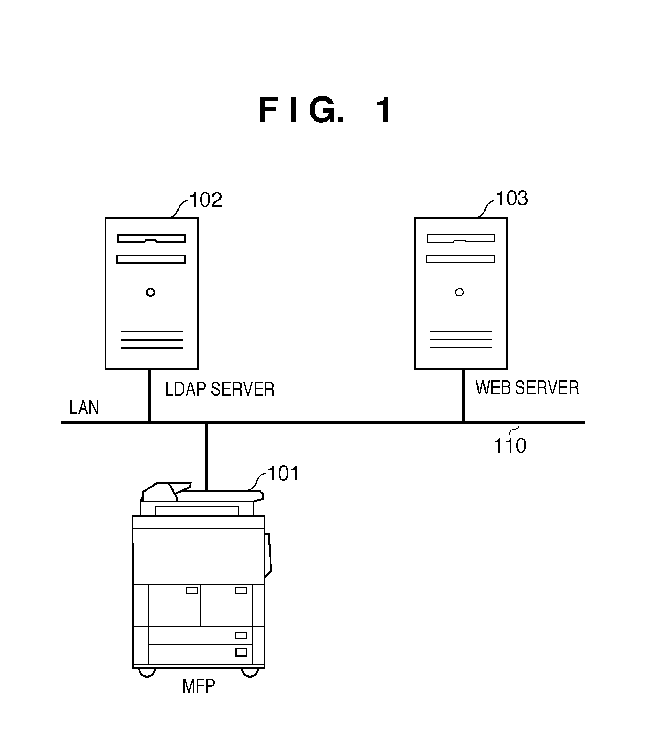

An embodiment of the present invention will be described hereinafter with reference to Figs. 1 to 9. As a characteristic feature of this embodiment, an MFP as an example of an information processing apparatus requests a Web application on a Web server to transmit screen information required to display an operation screen on a display unit using a Web browser. The Web application instructs an authentication execution function of the MFP to execute authentication processing before it provides the screen information to the Web browser.

### <Arrangement of Information Processing System 100>

Fig. 1 is a diagram showing an example of the overall arrangement of an information processing system 100. To a LAN 110, an MFP 101, LDAP (Lightweight Directory ACCESS Protocol) server 102, and Web server 103 are connected to be able to communicate with each other. On the LAN 110, an FTP (File Transfer Protocol) server (not shown) is also arranged, and the MFP 101 can transmit image data to the FTP server using an FTP.

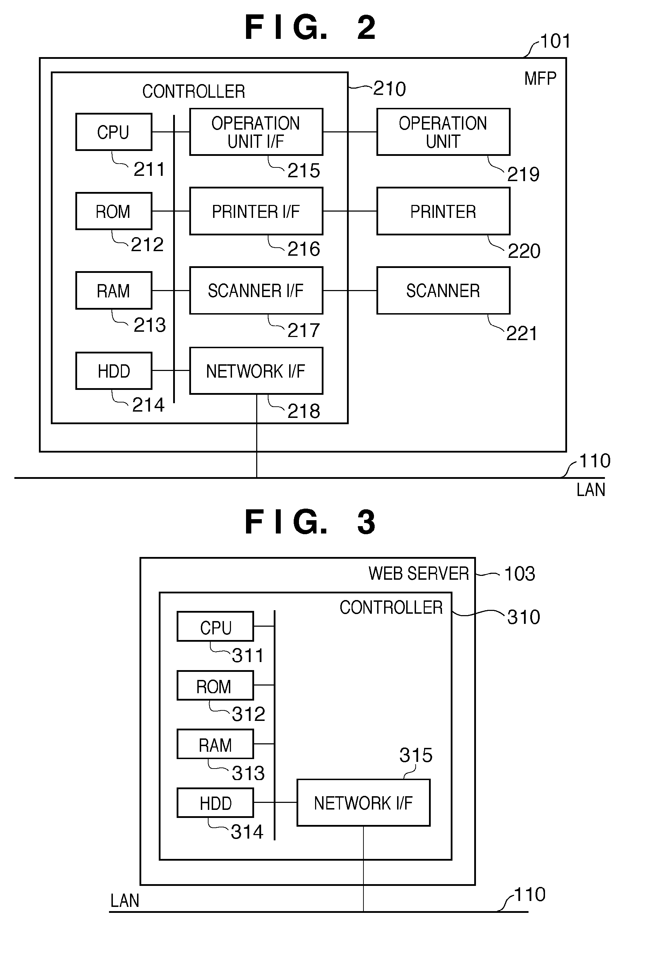

Fig. 2 is a block diagram showing an example of the arrangement of the MFP 101. A controller 210 includes a CPU 211, and controls the operations of the overall MFP 101. The CPU 211 reads out control programs stored in a ROM 212 and executes various kinds of control processing such as read control and transmission control. A RAM 213 is used as temporary storage areas such as a main memory and work area of the CPU 211. An HDD 214 is a storage device which stores image data, various programs or various information tables.

An operation unit I/F 215 is an interface which connects an operation unit 219 and the controller 210. The operation unit 219 includes a liquid crystal display unit having a touch panel function, and a keyboard. As will be described later, the MFP 101 includes a Web browser function. A Web browser of the MFP 101 analyzes an HTML file received from the Web server 103, and displays an operation screen on the operation unit 219 based on the description of the HTML file.

A printer I/F 216 is an interface which connects a printer 220 and the controller 210. Image data to be printed by the printer 220 is transferred from the controller 210 to the printer 220 via the printer I/F 216, and the printer 220 prints that data on a printing medium.

A scanner I/F 217 is an interface which connects a scanner 221 and the controller 210. The scanner 221 generates image data by reading an image on a document, and inputs that data to the controller 210 via the scanner I/F 217.

A network I/F 218 is an interface which connects the controller 210 and LAN 110. The controller 210 exchanges various kinds of information (image data, etc.) with external apparatuses (for example, the LDAP server 102 and Web server 103) on the LAN 110 via the network I/F 218.

Fig. 3 is a block diagram showing an example of the arrangement of the Web server 103. Note that the LDAP server 102 has the same arrangement as that of the Web server 103 shown in Fig. 3. A controller 310 includes a CPU 311, and controls the operations of the overall Web server 103. The CPU 311 reads out control programs stored in a ROM 312, and executes various kinds of control processing. A RAM 313 is used as temporary storage areas such as a main memory and work area of the CPU 311. An HDD 314 stores image data, various programs, or various information tables to be described later.

A network I/F 315 is an interface which connects the controller 310 and LAN 110. The controller 310 exchanges various kinds of information with other apparatuses on the LAN 110 via the network I/F 315.

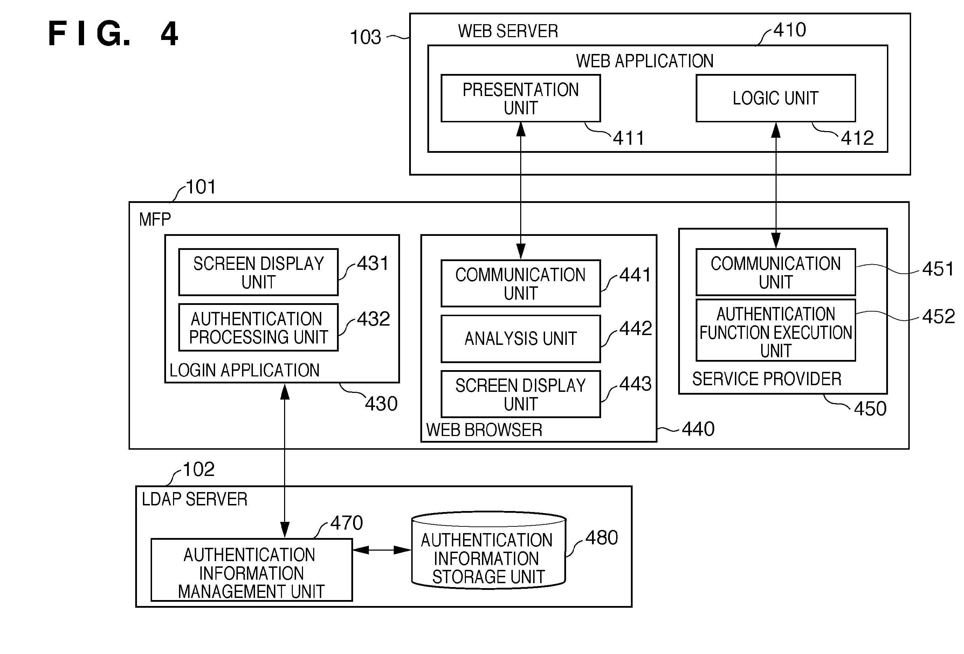

Fig. 4 is a block diagram showing an example of the control arrangement of the information processing system 100. Processes by respective function units included in the MFP 101, LDAP server 102, and Web server 103 are implemented when the CPUs of these apparatuses execute control programs.

The MFP 101 includes a login application 430, Web browser 440, and service provider 450. Note that respective applications may be implemented by software, hardware, or their combination. The login application 430 includes a screen display unit 431 and authentication processing unit 432. The screen display unit 431 displays, on the display unit of the operation unit 219, an authentication screen which prompts the user to input authentication information required for authentication processing executed by the authentication processing unit 432. The authentication processing unit 432 executes the user authentication processing based on information input by the user via the authentication screen.

Screen information associated with the authentication screen is held in advance in, for example, the ROM 212 in the MFP 101 in place of the Web server 103. The login application 430 reads out the screen information held in the MFP 101 and displays the authentication screen. A screen which is displayed based on information that is held in advance in the MFP 101 will be referred to as a "native screen" hereinafter.

The LDAP server 102 includes an authentication information management unit 470 and authentication information storage unit 480. The authentication information storage unit 480 pre-stores authentication information of users who are permitted to use the MFP 101. The authentication information management unit 470 manages authentication information stored in the authentication information storage unit 480. The authentication processing unit 432 of the MFP 101 implements the user authentication processing by establishing a connection to the LDAP server 102 via the LAN 110, and collating information input by the user via the authentication screen with the authentication information in the authentication information storage unit 480. Note that the authentication information of each user may be stored in, for example, the HDD 214 in the MFP 101 in place of the LDAP server 102.

The Web browser 440 of the MFP 101 includes a communication unit 441, analysis unit 442, and screen display unit 443. The communication unit 441 communicates with a presentation unit 411 of a Web application 410 according to an HTTP protocol. For example, the communication unit 441 requests the Web application 410 to transmit screen information of an operation screen to be displayed on the operation unit 219, or notifies the Web application 410 of an instruction input by the user via the operation screen displayed on the operation unit 219. The analysis unit 442 analyzes an HTML file as screen information received from the Web application 410. The HTML file includes a description indicating the contents of the operation screen to be displayed on the operation unit 219. The screen display unit 443 displays the operation screen on the operation unit 219 based on the analysis result by the analysis unit 442. A screen which is displayed based on information (HTML file) received from the Web server 103 will be referred to as a "Web browser screen" hereinafter.

The Web application 410 on the Web server 103 includes the presentation unit 411 and a logic unit 412. The presentation unit 411 communicates with the communication unit 441, and transmits the screen information of the operation screen to the MFP 101 in response to a request from the MFP 101. The presentation unit 411 receives an instruction input by the user via the operation screen of the MFP 101 from the MFP 101.

Upon reception of a user instruction via the presentation unit 411, the Web application 410 executes various kinds of processing according to the contents of the instruction. Furthermore, the Web application 410 instructs the MFP 101 to execute predetermined processing using the logic unit 412 based on the executed processing. For example, the Web application 410 instructs the MFP 101 to execute print processing by the printer 220, read processing by the scanner 221 or transmission processing via the network I/F 218. Note that the logic unit 412 communicates with a communication unit 451 in the service provider 450 of the MFP 101.

The service provider 450 of the MFP 101 includes the communication unit 451 and an authentication function execution unit 452. The communication unit 451 accepts a processing request from the logic unit 412 in the Web application 410. Upon reception of a processing execution request from the Web application 410, the authentication function execution unit 452 executes the login application 430.

### <Processing in Information Processing System 100>

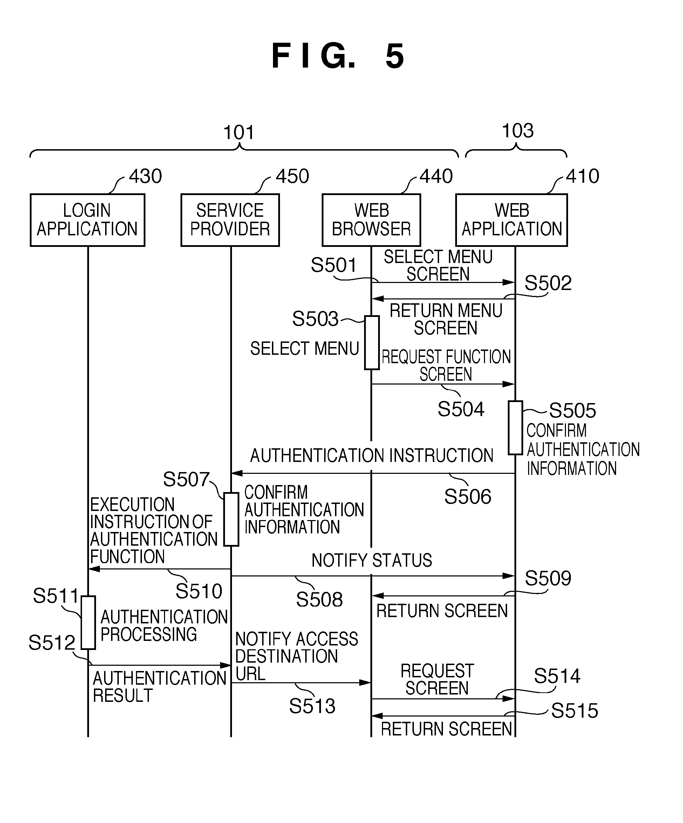

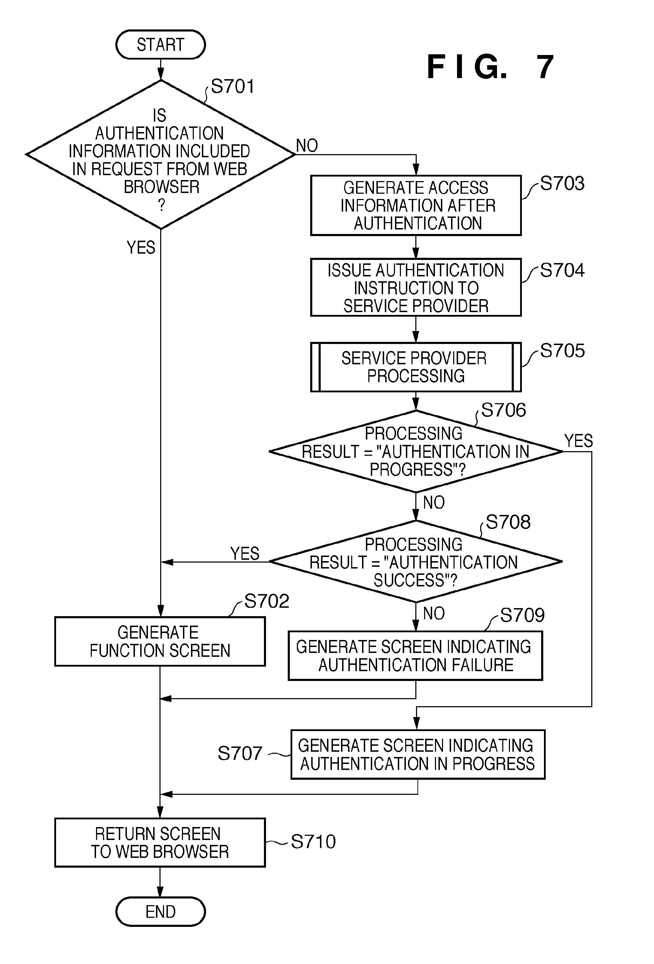

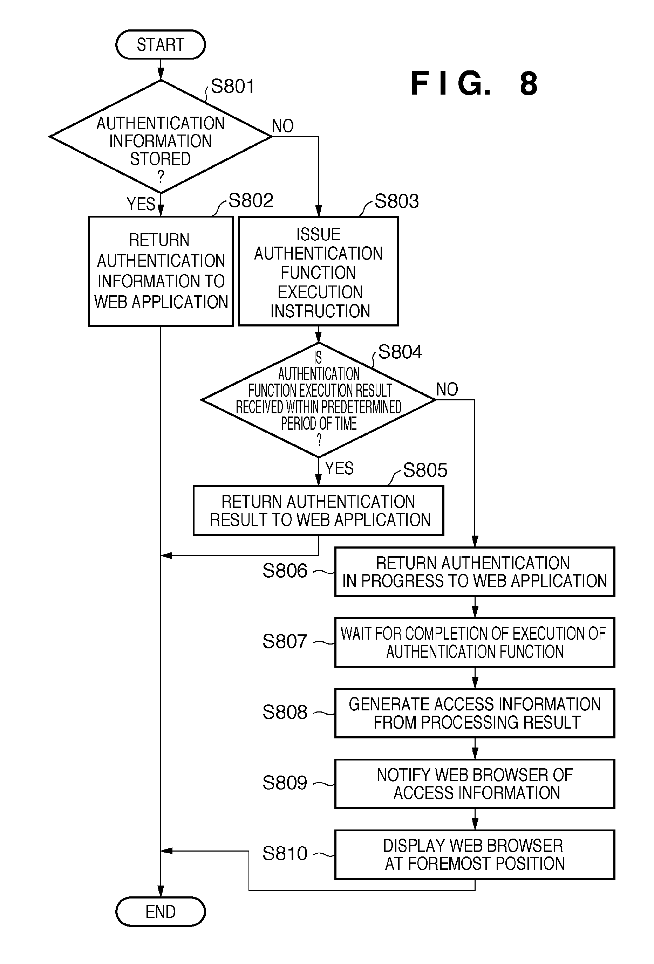

Fig. 5 shows the sequence of processes in the information processing system 100 according to this embodiment. The sequence of processes in the MFP (information processing apparatus) 101 and Web server 103 will be described below along the sequence of the processes shown in Fig. 5 together with Figs. 7 and 8.

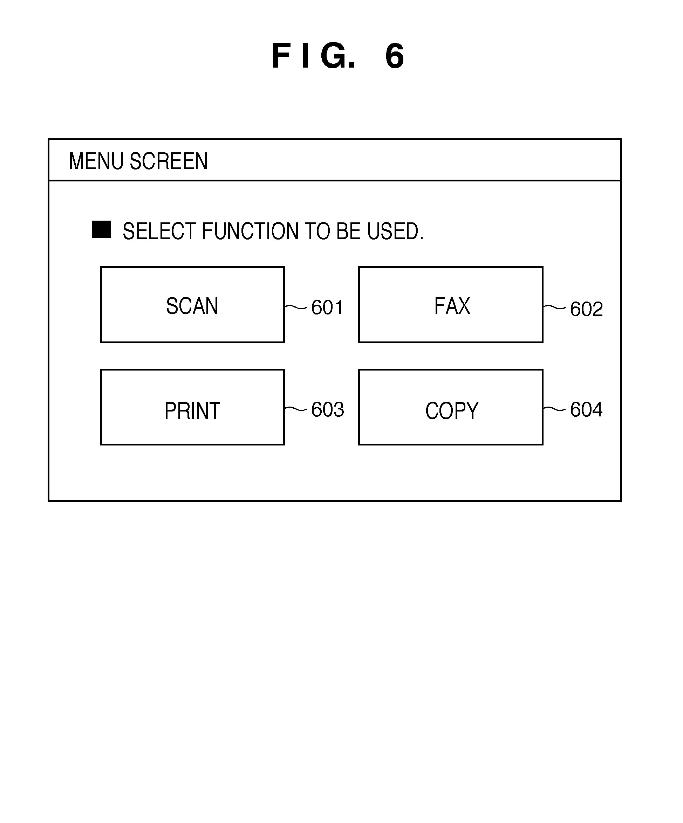

When the user launches the Web browser 440 of the MFP 101, the Web browser 440 requests the Web application 410 to transmit screen information of a menu screen in step S501. In response to this request, the Web application 410 of the Web server 103 returns the screen information of the menu screen to the Web browser 440 in step S502. Upon reception of the screen information, in step S503, the MFP 101 displays the menu screen on the operation unit 219, and prompts the user to decide a function to be used. Fig. 6 shows an example of the menu screen displayed on the operation unit 219 in step S502. Buttons 601 to 604 correspond to respective functions of the MFP 101. When the user presses one of these buttons, a function to be used by the user is selected.

When the user selects one of the functions, the Web browser 440 requests the Web application 410 to transmit required screen information in step S504, so as to display a function screen required to implement operations associated with the selected function on the operation unit 219. Note that the process in step S504 corresponds to that performed by a screen information request unit. At the time of transmission of the request, when the authentication processing of the user is already complete in the MFP 101, and the authentication information is stored in, for example, the HDD 214, the Web browser 440 may transmit the request added with the authentication information to the Web application 410. Alternatively, at the time of transmission of the request, the authentication processing of the user may be executed in advance, and the request added with generated authentication information may be transmitted.

### (Processing in Web Server 103)

The sequence of the processing started in response to the request of the screen information of the function screen in step S504 will be described in detail below using Fig. 7. Fig. 7 is a flowchart showing the sequence of processing in the Web server 103. However, step S705 is a process in the MFP 101 based on an instruction from the Web server 103. Note that a series of processes in Fig. 7 correspond to those in steps S504 to S509 in Fig. 5.

The Web application 410 determines in step S701 whether or not authentication information of the user is added to the request from the Web browser 440. This determination process corresponds to "confirm authentication information" in step S505. If the request includes the authentication information, since the user authentication processing in the MFP 101 is already complete, the process advances to step S702. In step S702, the Web application 410 generates screen information of a function screen corresponding to the requested function, and the process advances to step S710. On the other hand, if the request from the Web browser 440 does not include any authentication information in step S701, the process advances to step S703, and the Web server 103 instructs the MFP 101 to execute the user authentication processing.

In step S703, the Web application 410 may generate access information indicating a location of screen information of a screen, which is displayed by the MFP 101 on the operation unit 219, after execution of the authentication processing in the MFP 101. The access information is generated, for example, as follows.
Example 1: When the URL of an access destination is changed according to an authentication result,
   at the time of an authentication success:
   http://192.168.0.1/Scan.aspx
   at the time of an authentication failure:
   http://192.168.0.1/Failure.aspx
Example 2: When a parameter of an access destination is changed according to an authentication result,
   at the time of an authentication success:
   http://192.168.0.1/Scan.aspx?result=success at the time of an authentication failure:
   http://192.168.0.1/Scan.aspx?result=failure

Note that Example 1 indicates a case in which the URL of the Web application 410 (192.168.0.1) as the access destination is changed according to the authentication result. In this case, when the user authentication has succeeded, the Web browser 440 requests the Web application 410 to transmit screen information "Scan.aspx". When the user authentication has failed, the Web browser 440 requests the Web application 410 to transmit screen information "Failure.aspx". On the other hand, Example 2 indicates a case in which the parameter of the access destination is changed according to the authentication result. In this case, the Web browser 440 accesses an identical URL (http://192.168.0.1/Scan.aspx) on the Web application 410, but it changes the parameter according to the authentication result. With these processes, the Web browser 440 can receive different screen information from the Web application 410 based on the success or failure of authentication.

After the process in step S703, the Web application 410 transmits authentication instruction information that instructs to execute user authentication processing to the service provider 450 of the MFP 101 in step S704. In this step, the Web application 410 may transmit the access information generated in step S703 together with the authentication instruction information. After that, the process advances to step S705. Note that the process in step S704 corresponds to "authentication instruction" in step S506 and a process performed by an authentication processing request unit.

In step S705, the service provider 450 of the MFP 101 executes processing to be described later using Fig. 8 based on the received authentication instruction information. In this case, the service provider 450 notifies the Web application 410 of status information "authentication in progress", "authentication success", or "authentication failure" as the processing result in step S705. After that, the process advances to step S706. Note that the notification process in step S705 corresponds to "notify status" in step S508.

In steps S706 and S707, the Web application 410 verifies the processing result in the MFP 101 based on the received notification. If the processing result of the MFP 101 is "authentication in progress" in step S706, the process advances to step S707, and the Web application 410 generates screen information indicating that authentication is in progress. After that, the process advances to step S710. On the other hand, if the processing result of the MFP 101 is not "authentication in progress" in step S706, the process advances to step S708. If the Web application 410 determines in step S708 that the processing result of the MFP 101 is "authentication success", the process advances to step S702. In step S702, the Web application 410 generates screen information of a function screen corresponding to the requested function, and the process advances to step S710. On the other hand, if the processing result of the MFP 101 is not "authentication success" in step S708, the process advances to step S709. In step S709, the Web application 410 generates screen information indicating that authentication has failed. After that, the process advances to step S710.

In step S710, the Web application 410 transmits the generated screen information to the Web browser 440. Note that the process in step S710 corresponds to "return screen" in step S509 or S515 and a process performed by a screen information transmission unit. The Web browser 440, which received the screen information, executes display control for displaying a function screen on the operation unit 219 using the screen information.

### (Processing in MFP 101)

The processing to be executed by the MFP 101 in step S705 in Fig. 7 will be described in detail below using Fig. 8. Fig. 8 is a flowchart showing the sequence of processing executed by the service provider 450 and login application 430.

The service provider 450 determines in step S801 whether or not authentication information has already been stored in the MFP 101. Note that the MFP 101 may execute the user authentication processing in advance before reception of the authentication instruction from the Web application 410 in step S704. Hence, the service provider 450 determines by this determination process whether or not the authentication processing has already been executed in the MFP 101 after the screen information request in step S504 until the execution instruction of the authentication processing is received from the Web application 410 in step S506. If the authentication information has already been stored in the MFP 101 in step S801, the process advances to step S802, and the service provider 450 transmits status information indicating that the authentication processing is complete and the authentication information to the Web application 410. Note that the process in step S801 corresponds to "confirm authentication information" in step S507. Also, the process in step S802 corresponds to "notify status" in step S508.

On the other hand, if no authentication information is stored in the MFP 101 in step S801, the process advances to step S803. In step S803, the service provider 450 instructs the login application 430 to execute the user authentication processing. Note that the process in step S803 corresponds to "execution instruction of authentication function" in step S510. If the execution instruction of the authentication function is issued from the service provider 450 to the login application 430 in step S510, the login application 430 executes the authentication processing in step S511. Furthermore, the login application 430 transmits an authentication result to the service provider 450 in step S512.

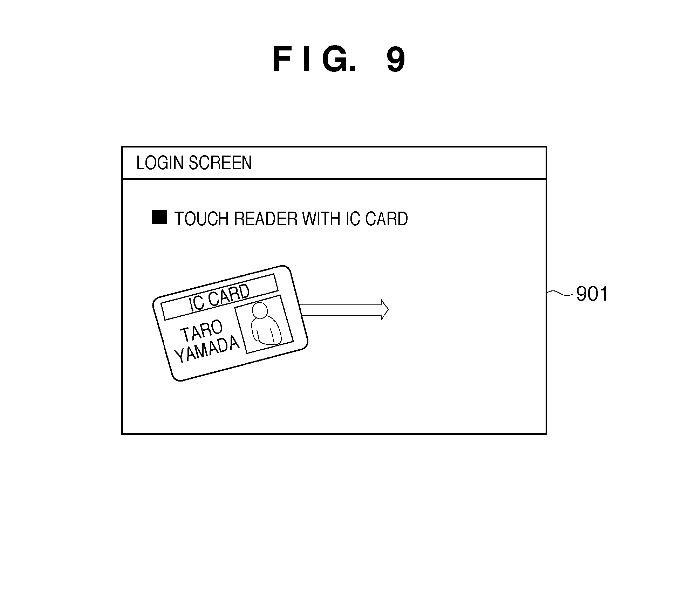

When the execution instruction of the authentication function is issued in step S510, a screen displayed on the operation unit 219 is switched from the Web browser screen to a login screen as the native screen. Fig. 9 shows an example of the login screen displayed by the login application 430 on the operation unit 219 in step S510. Fig. 9 shows a login screen 901 when an IC card is used as an example of an authentication method.

As the authentication processing method in step S511, various methods can be used. For example, in case that authentication using an IC card or biometrics using a fingerprint is performed, the authentication processing is normally completed within a short period of time. On the other hand, in a method that prompts the user to input a user ID and password using a software keyboard, the authentication processing is likely to require much time depending on the user operation time. However, in general, a communication between the Web application 410 and Web browser 440 and that between the Web application 410 and service provider 450 often result in a connection error due to time-out if a communication is not made for a predetermined period of time.

Hence, in order to prevent occurrence of any connection time-out, the service provider 450 determines in step S804 whether or not the execution result of the authentication function is received from the login application 430 within a predetermined period of time (within a given time period). If the service provider 450 receives the execution result of the authentication function from the login application 430 within the given time period, the process advances to step S805. In step S805, the service provider 450 transmits status information as the authentication result to the Web application 410. If the authentication processing has succeeded, the service provider 450 transmits authentication information together with the status information. Note that the process in step S805 corresponds to a process by an authentication information transmission unit.

On the other hand, if the given time period has elapsed without receiving any execution result of the authentication function within the given time period in step S804, the process advances to step S806. In step S806, the service provider 450 transmits status information indicating that execution of the authentication processing is in progress (authentication in progress) to the Web application 410. After that, the process advances to step S807. Note that the processes in steps S805 and S806 correspond to "notify status" in step S508.

As a modification of this embodiment, the service provider 450 may transmit status information indicating that authentication is in progress to the Web application 410 without waiting for reception of the execution result of the authentication function in step S804. In this case, the communication traffic between the service provider 450 and Web application 410 is likely to increase, but the processes in the service provider 450 and Web application 410 can be simplified.

In step S807, the service provider 450 waits until the execution of the authentication function by the login application 430 is complete. Upon reception of the authentication result from the login application 430, in step S808, the service provider 450 decides a URL of an access destination based on the authentication information and the access information generated in step S703. Furthermore, the service provider 450 notifies the Web browser 440 of the URL in step S809. The Web browser 440, which received the URL, receives screen information from the access destination, and displays a screen at a foremost position on the operation unit 219 using the screen information in step S810. Note that the process in step S809 corresponds to "notify access destination URL" in step S513. At this time, the series of processes from reception of the authentication instruction until transmission of the authentication result in the service provider 450 are complete.

Note that the Web browser 440, which received the notification in step S513, requests the access destination URL of the Web application 410 to transmit screen information in step S514. The Web application 410 transmits, in step S515, screen information of a function screen corresponding to one of an authentication success or failure to the Web browser 440 based on the received URL information.

As described above, in the information processing system according to this embodiment, when the Web server 103 receives a request of screen information of an operation screen from the MFP 101, it determines based on the request whether or not to require user authentication information. If the Web server 103 determines that the authentication information is required, it requests the MFP 101 to execute the user authentication processing. In response to this request, the MFP 101 executes the authentication processing, and transmits authentication information to the Web server 103. Upon reception of the authentication information, the Web server 103 generates screen information, and transmits it to the MFP 101. The MFP 101 displays an operation screen on the operation unit based on the screen information. Then, at the time of execution of an application on the Web server 103 from the MFP 101, the application on the Web server can request the MFP 101 to execute the user authentication processing when the user authentication information is required not only before but also during execution of the application.

### (Other Embodiments)

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (e.g., computer-readable medium).

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing system, which comprises an information processing apparatus (101), and a server (103) that provides screen information for displaying an operation screen on a display unit (219) of said information processing apparatus to said information processing apparatus,
said information processing apparatus (101) comprising:
a screen information request means(440) arranged to request said server to transmit the screen information;
an authentication means(430, 450) arranged to execute, in a case that authentication instruction information which instructs to execute authentication processing of a user is received from said server, the authentication processing; and
a display control means(440) arranged to receive the screen information from said server, and to display the operation screen on the display unit, and
said server (103) comprising:
a determination means(410) arranged to decide, in a case that the request of the screen information is received from said information processing apparatus, whether or not to instruct said information processing apparatus to execute the authentication processing;
an authentication processing request means(410) arranged to transmit, in a case that said determination means decides to instruct said information processing apparatus to execute the authentication processing, the authentication instruction information to said information processing apparatus; and
a screen information transmission means(410) arranged to transmit, in a case that said determination means decides not to instruct the information processing apparatus to execute the authentication processing, the requested screen information to said information processing apparatus.

2. A system according to claim 1, wherein in a case that authentication information is not added to the request of the screen information, said determination means is configured to decide to instruct said information processing apparatus to execute the authentication processing, and in a case that the authentication information is added to the request, said determination means is configured to decide not to instruct said information processing apparatus to execute the authentication processing.

3. A system according to claim 2, wherein said screen information request means comprises an adding means (440) arranged to add the authentication information generated as a result of execution of the authentication processing by said authentication means to the request of the screen information.

4. A system according to claim 2, wherein said information processing apparatus further comprises a storage unit, and
said screen information request means comprises an adding means (440) arranged to add, in a case that the authentication information is stored in said storage unit of said information processing apparatus before requesting to transmit the screen information, the authentication information to the request of the screen information.

5. A system according to any one of claims 1 to 4, wherein said information processing apparatus further comprises a notification means (450) arranged to notify said server that execution of the authentication processing is in progress when a predetermined period of time has elapsed after the beginning of the authentication processing by said authentication means and before completion of the authentication processing.

6. A system according to any one of claims 1 to 5, wherein said authentication processing request means is configured to transmit access information indicating a location of the screen information required to display the operation screen indicating a success or a failure of the authentication processing on the display unit to said information processing apparatus together with the authentication instruction information, and
said display control means is configured to receive, based on the access information received from said server and the success or the failure of the authentication processing, the screen information from an access destination on said server and to display the operation screen on the display unit.

7. An information processing system, which comprises an information processing apparatus (101), and a server (103) that provides screen information for displaying an operation screen on a display unit (219) of said information processing apparatus to said information processing apparatus,
said information processing apparatus (101) comprising:
a screen information request means (440) arranged to request said server to transmit the screen information;
an authentication means (430) arranged to execute authentication processing of a user, and generate authentication information;
an authentication information transmission means (450) arranged to transmit, in a case that authentication instruction information which instructs to execute the authentication processing of the user is received from said server, the authentication information generated by said authentication means to said server; and
a display control means (440) arranged to receive the screen information from said server, and display the operation screen on the display unit, and
said server (103) comprising:
a determination means (410) arranged to decide, in a case that the request of the screen information is received from said information processing apparatus, whether or not to instruct said information processing apparatus to execute the authentication processing;
an authentication processing request means (410) arranged to transmit, in a case that said determination means decides to instruct said information processing apparatus to execute the authentication processing, the authentication instruction information to said information processing apparatus; and
a screen information transmission means (410) arranged to transmit, in a case that said determination means decides not to instruct said information processing apparatus to execute the authentication processing or in a case that the authentication information is received from said information processing apparatus, the requested screen information to said information processing apparatus.

8. A control method of an information processing system, which comprises an information processing apparatus (101), and a server (103) that provides screen information for displaying an operation screen on a display unit (219) of the information processing apparatus to the information processing apparatus, the method comprising:
the information processing apparatus requesting (S504) the server to transmit the screen information;
the server deciding (S505, S701), in a case that the request of the screen information is received from the information processing apparatus, whether or not to instruct the information processing apparatus to execute the authentication processing;
the server transmitting (S506, S703), in a case that it is decided in the deciding step to instruct the information processing apparatus to execute the authentication processing, the authentication instruction information to the information processing apparatus;
the server transmitting (S509, S515, S710), in a case that it is decided in the deciding step not to instruct the information processing apparatus to execute the authentication processing, the requested screen information to the information processing apparatus;
the information processing apparatus executing (S507, S510, S511), in a case that authentication instruction information which instructs to execute authentication processing of a user is received from the server, the authentication processing, and
the information processing apparatus receiving (S509, S515) the screen information from the server, and displaying the operation screen on the display unit.

9. A control method of an information processing system, which comprises an information processing apparatus (101), and a server (103) that provides screen information for displaying an operation screen on a display unit (219) of the information processing apparatus to the information processing apparatus, the method comprising:
the information processing apparatus requesting (S504) the server to transmit the screen information;
the server deciding (S505, S701), in a case that the request for screen information is received from the information processing apparatus, whether or not to instruct the information processing apparatus to execute the authentication processing;
the server transmitting (S506, S703), in a case that it is decided in the deciding step to instruct the information processing apparatus to execute the authentication processing, the authentication instruction information to the information processing apparatus;
the server transmitting (S509, S515, S710), in a case that it is decided in the deciding step not to instruct the information processing apparatus to execute the authentication processing or in a case that the authentication information is received from the information processing apparatus, the requested screen information to the information processing apparatus;
the information processing apparatus executing (S510, S511) authentication processing of a user, and generating authentication information;
the information processing apparatus transmitting (S508), in a case that authentication instruction information which instructs to execute the authentication processing of the user is received from the server, the authentication information generated in the executing the authentication processing to the server; and
the information processing apparatus receiving (S509, S515) the screen information from the server, and displaying the operation screen on the display unit.

10. A program for causing a computer to execute respective steps in a control method of an information processing system according to claim 8 or 9.

11. A storage medium storing a program according to claim 10.
